# FASCICULE DE BREVET EUROPEEN

(11) **EP 2 812 161 B1**
(45) Date de publication et mention de la délivrance du brevet: **25.11.2020**
(21) Numéro de dépôt: 13706654.4
(22) Date de dépôt: 08.02.2013
(51) Int. Cl.: B25J 9/16

(54) **INSTALLATION ET PROCEDE POUR L'ACCROCHAGE AUTOMATIQUE DE PIECES SUR DES SUPPORTS COMPLEXES**
EINHEIT UND VERFAHREN ZUM AUTOMATISCHEN FESTHAKEN VON TEILEN AUF KOMPLEXEN TRÄGERN
UNIT AND METHOD FOR THE AUTOMATIC HOOKING OF PARTS ONTO COMPLEX SUPPORTS

(30) Priorité: 10.02.2012 FR 1251291
(43) Date de publication de la demande: 17.12.2014
(73) Titulaire: Sileane, 42000 Saint-Etienne (FR)
(72) Inventeur: HENRY, Hervé Emmanuel, 42160 Andrezieux Boutheon (FR)
(74) Mandataire: Cabinet Laurent & Charras
(86) Numéro de dépôt international: PCT/FR2013/050263
(87) Numéro de publication internationale: WO 2013/117868

(56) Documents cités:
- EP-A1- 1 433 537
- EP-A1- 1 586 422
- EP-A1- 2 221 152
- DE-A1- 19 851 130
- JP-A- 5 279 879

## Description

### DOMAINE TECHNIQUE

La présente invention se rapporte au secteur technique des installations d'accrochage automatique de pièces sur des supports complexes, en vue d'un traitement ultérieur.

Plus précisément, dans les industries automobiles ou cosmétiques par exemple, il est souvent nécessaire, dans le cadre de la production de pièces quelconques, de les accrocher, de façon régulière, sur une pluralité de supports complexes telles que des griffes ou des épingles. Lesdites pièces sont ensuite destinées à subir un traitement ultérieur tel qu'une métallisation, une galvanisation par exemple ou tout autre traitement. On peut citer à titre d'exemple non limitatif, des pièces en matières plastiques telles que des poignées ou des bouchons de flacons, destinées à être métallisées. Ces pièces sont reçues sur les supports complexes tels que définis pour limiter le contact du support avec lesdites pièces et réaliser par exemple l'opération de métallisation de manière homogène sur toute la surface de ladite pièce.

L'invention concerne alors une installation d'accrochage automatique de pièces sur des supports complexes, et concerne également un procédé d'accrochage automatique de pièces sur des supports complexes mettant en œuvre une telle installation.

### ART ANTERIEUR

Il est connu de l'état de la technique, et notamment du document EP 2 221 152, des installations conçues pour prendre et placer des pièces dans des supports plans tels que des bacs par exemple, avec une orientation précise. En d'autres termes, ces installations sont conçues pour poser et positionner des pièces dans des supports qui sont plans et non complexes.

Il apparait qu'aucune installation, permettant de réaliser un accrochage automatique de pièces sur des supports complexes, n'est connue à ce jour. Dans les industries précitées par exemple, pour réaliser des opérations de métallisation de pièces plastiques, ces dernières sont accrochées sur des supports complexes tels que des griffes, par un opérateur et manuellement.

Il apparaît bien sûr tout à fait évident que le fait de réaliser ces opérations manuellement comprend un certain nombre d'inconvénients en termes de productivité et de pénibilité.

Généralement, les supports complexes destinés à recevoir les pièces à accrocher puis à traiter, sont répartis de façon régulière sur toute la surface d'un élément formant support et sont d'une forme assez spécifique. Les supports complexes peuvent être de toutes formes quelconques en trois dimensions et peuvent notamment se présenter par exemple sous la forme d'une combinaison de griffes ou d'épingles. La forme de ces supports complexes n'est pas répétable d'un support à l'autre, il apparaît alors difficile de réaliser les opérations d'accroche automatique des pièces, puisqu'il est nécessaire de programmer un seul mouvement d'accroche pour s'adapter à la géométrie du support.

### EXPOSE DE L'INVENTION

L'invention tend tout d'abord à proposer une alternative à ces opérations d'accrochage manuel en proposant une installation d'accrochage automatique de pièces sur des supports complexes.

L'invention a également pour objectif de proposer une installation qui soit de conception simple sûre et rationnelle, et qui permette de réaliser les opérations d'accrochage de pièces sur des supports complexes d'une manière significativement rapide et efficace. Cela a pour conséquence notamment, une augmentation significative de la productivité lorsqu'une telle installation est introduite dans une chaine de production.

L'invention a également pour objectif de permettre l'accroche automatique d'une pluralité de pièces sur une pluralité de supports complexes, indépendamment de l'inconvénient lié à la non répétabilité de l'opération. L'accroche sera automatique, rapide et adaptée.

Pour résoudre les problèmes précités, il a été mis au point une installation d'accrochage automatique de pièces sur des supports de forme spécifique de type griffes ou épingles. Selon l'invention, l'installation comprend :
- des supports de forme spécifique de types griffes ou épingles et de géométrie non répétable d'un support à l'autre,
- au moins un système polyarticulé, destiné à effectuer les opérations d'accroche de pièce proprement dites, sur les supports et comprenant des moyens de préhension d'au moins une pièce,
- un premier système de vision, assujetti audit système polyarticulé et destiné à localiser les pièces en position et en orientation pour permettre audit système polyarticulé de saisir avec une orientation déterminée au moins une pièce à accrocher,
- des moyens de positionnement d'un support à proximité du système polyarticulé,
- un deuxième système de vision, sous la forme d'un système de reconstruction d'image en trois dimensions, assujetti au système polyarticulé et destiné à localiser le support pour permettre audit système polyarticulé d'accrocher ladite pièce sur ledit support.

Une telle installation permet alors l'accrochage en automatique de pièces sur des supports complexes. Le système polyarticulé est apte à saisir au moins une pièce. La saisie de la pièce se fait par l'intermédiaire des moyens de préhension et est possible grâce aux informations récoltées par le premier système de vision. Ensuite, par l'intermédiaire du deuxième système de vision, la trajectoire d'accroche du système polyarticulé est calculée en temps réel pour chaque support complexe. De ce fait, l'accroche de la pièce est possible indépendamment de la géométrie non répétable des supports complexes. Le système polyarticulé accroche donc la pièce saisie sur un support complexe positionné à proximité par les moyens de positionnement.

La configuration spécifique des supports de types griffes ou épingles et en trois dimensions, implique que le deuxième système de vision soit capable de reconstruire une image en trois dimensions desdits supports.

Selon des formes de réalisations différentes, et en fonction des pièces à accrocher, les moyens de préhension du système polyarticulé se présentent sous la forme d'au moins une pince, ou bien sous la forme d'au moins un vérin assujetti à au moins une ventouse par exemple. Dans cette dernière configuration, les moyens de préhension du système polyarticulé peuvent comprendre un élément de centrage permettant de centrer la pièce saisie, l'élément de centrage étant de forme complémentaire à la pièce saisie pour la forcer à adopter une orientation définie.

Dans une forme de réalisation préférée de l'installation selon l'invention, celle-ci comprend des moyens d'approvisionnement en pièces se présentant sous la forme de plateaux thermoformés recevant les pièces, et d'un convoyeur présentant lesdits plateaux à proximité du système polyarticulé. Il est à noter que les pièces peuvent arriver directement en vrac.

Le premier système de vision se présente sous la forme d'une caméra et d'un système d'éclairage.

Le deuxième système de vision est un système de reconstruction d'image en trois dimensions, il peut notamment se présenter sous la forme d'une deuxième caméra et d'un émetteur LA.S.E.R. muni d'une tête éclatant le faisceau dudit émetteur L.A.S.E.R. sous la forme d'une ligne, ledit émetteur L.A.S.E.R. étant assujetti à des moyens de translation rectiligne dans un plan parallèle au plan de vision de ladite deuxième caméra.

Avantageusement, les moyens de positionnement se présentent sous la forme d'un deuxième système polyarticulé ou non d'axes et destiné à positionner lesdits supports complexes à proximité du système polyarticulé, lesdits supports complexes étant régulièrement répartis sur toute la surface définie par un élément formant support.

L'invention concerne également un procédé d'accroche en automatique de pièces sur des supports de forme spécifiques de type griffes ou épingles et de géométrie non répétable d'un support à l'autre. Selon l'invention, un tel procédé comprend les étapes consistant à :
- localiser une pièce, en position et en orientation, au moyen d'un premier système de vision assujetti à un système polyarticulé,
- saisir une pièce au moyen dudit système polyarticulé,
- positionner un support à proximité du système polyarticulé, par l'intermédiaire de moyens de positionnement de supports
- localiser, au moyen d'un deuxième système de vision sous la forme d'un système de reconstruction d'image en trois dimensions, le support destiné à recevoir la pièce à accrocher,
- accrocher ladite pièce au moyen du système polyarticulé et,
- positionner à proximité du système polyarticulé, et par l'intermédiaire des moyens de positionnement des supports, un autre support destiné à recevoir une autre pièce à accrocher.

De préférence, le procédé selon l'invention comprend, avant l'étape consistant à localiser une pièce en position et en orientation, une étape consistant à approvisionner le système polyarticulé en pièces par l'intermédiaire de moyens d'approvisionnement.

### BREVE DESCRIPTION DES DESSINS

D'autres caractéristiques et avantages de l'invention ressortiront clairement de la description qui en est faite ci-après, à titre indicatif et nullement limitatif, en référence aux figures annexées, dans lesquelles :
- la figure 1 est une représentation schématique en perspective de l'installation selon l'invention, celle-ci vue sensiblement de dessus et comprenant deux systèmes polyarticulés ;
- la figure 2 est une représentation schématique en perspective d'une partie de l'installation, notamment représentant un système polyarticulé vue de dos et accrochant une pièce sur un support complexe ;
- les figures 3 et 4 sont des représentations schématiques en perspective représentant des exemples de supports complexes ;
- la figure 5 est une représentation schématique en perspective de l'installation selon l'invention, celle-ci vue sensiblement de dessus et représentant notamment les moyens de positionnement des supports complexes sous la forme d'un deuxième système polyarticulé ;
- la figure 6 est une représentation schématique en perspective d'une partie de l'installation, notamment représentant le deuxième système polyarticulé maintenant un élément formant support comprenant une pluralité de supports complexes ;
- la figure 7 est une représentation schématique en perspective d'une forme de réalisation particulière de l'invention, le système polyarticulé étant représenté simultanément dans une position de prise d'une pièce et dans une position d'accroche d'une pièce ;
- les figures 8, 9 et 10 sont des représentations schématiques en perspective représentant uniquement le système polyarticulé, le premier système de vision sous la forme d'une caméra, et le deuxième système de vision sous la forme d'une caméra associée à un émetteur L.A.S.E.R. monté avec capacité de translation rectiligne, représentés respectivement, sensiblement de face, de côté et de dos ;
- la figure 11 est une représentation schématique en perspective représentant une forme de réalisation particulière des moyens de préhension du système polyarticulé, se présentant sous la forme d'une pince ;
- la figure 12 est une représentation schématique en perspective représentant une forme de réalisation particulière des moyens de préhension du système polyarticulé, se présentant sous la forme de vérins munis de ventouses, ledit moyen de préhension comprenant également un élément de centrage de la pièce saisie ;
- la figure 13 est une représentation schématique en perspective représentant les moyens de translation rectiligne de l'émetteur L.A.S.E.R.
- la figure 14 est une représentation schématique d'une installation selon l'invention comprenant quatre systèmes polyarticulés, vue de dessus.

### EXPOSE DETAILLE DE L'INVENTION

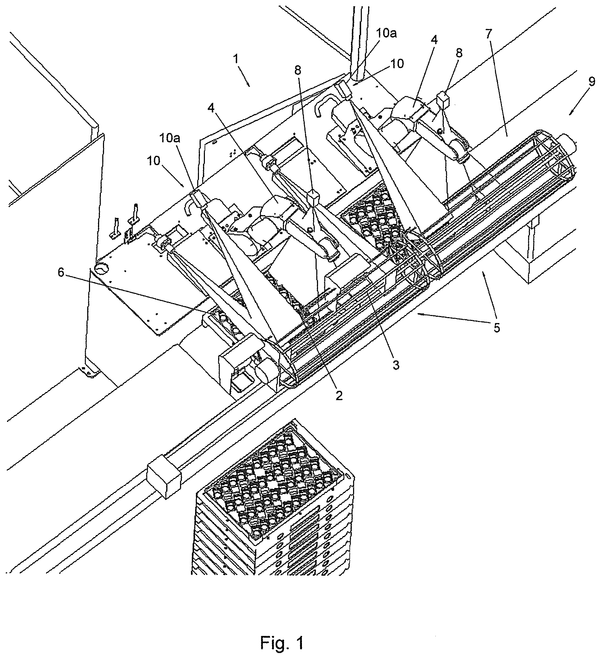

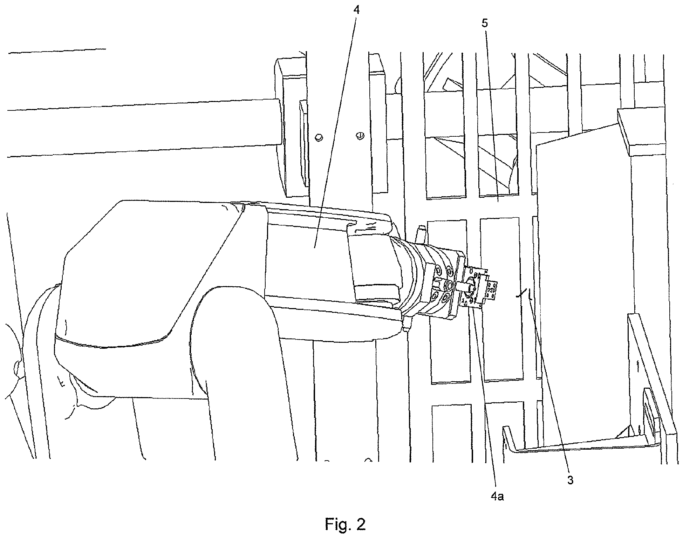

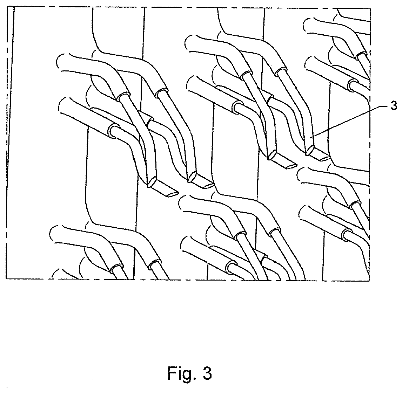

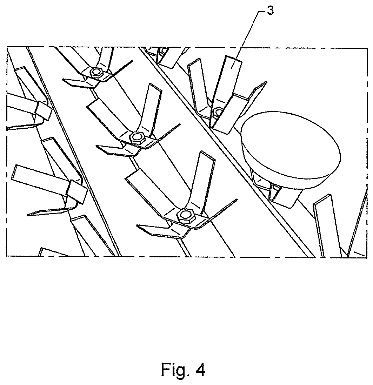

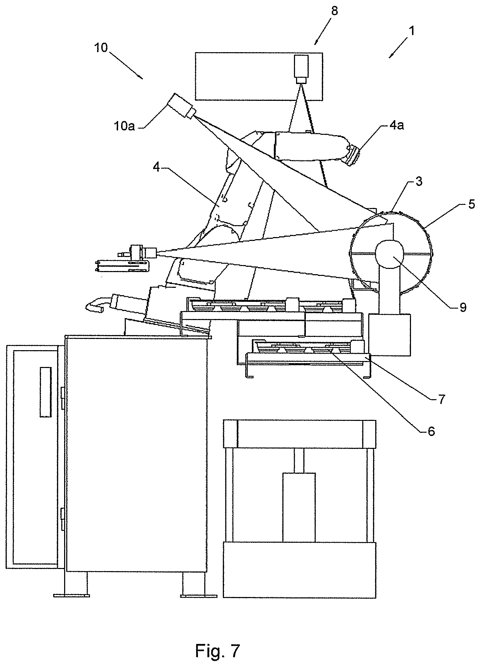

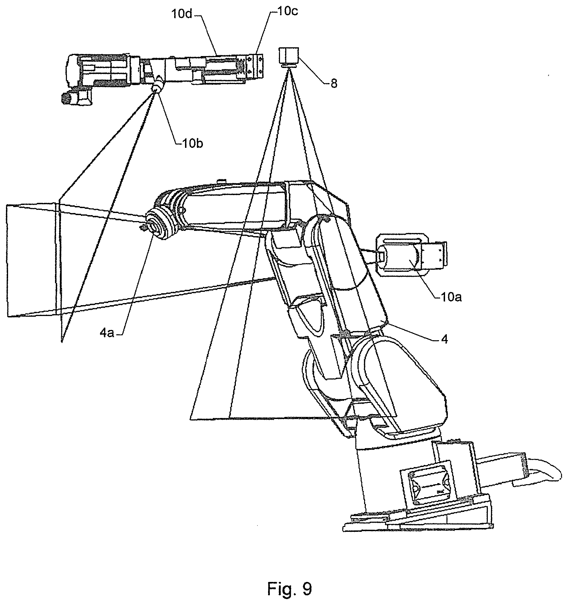

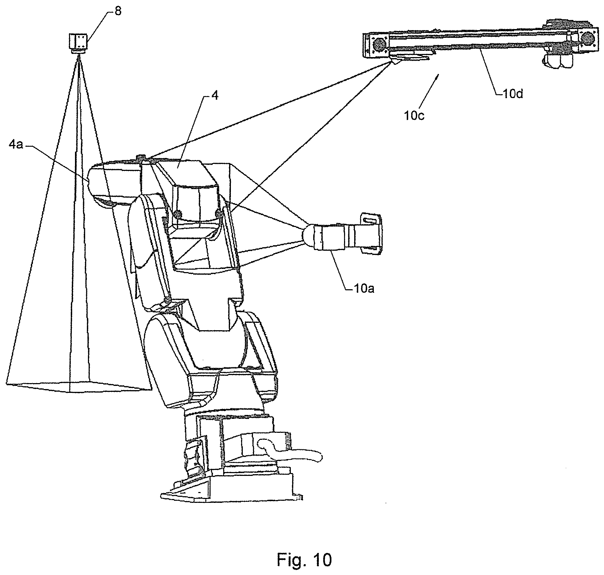

En référence aux figures 1 à 14 l'installation (1) d'accrochage automatique de pièces (2) sur des supports complexes (3), selon l'invention, comprend tout d'abord un système polyarticulé (4) de manipulation de pièces (2), à six degrés de liberté.

Ce système polyarticulé (4) est notamment destiné à effectuer les opérations d'accroche de pièces (2) proprement dites, sur des supports complexes (3). Les supports complexes (3) sont destinés à recevoir les pièces (2) à accrocher puis à traiter, et sont répartis de façon régulière sur toute la surface d'un élément formant support (5) et sont d'une forme spécifique de type griffes ou épingles en trois dimensions. La forme de ces supports complexes (3) n'est pas répétable d'un support à l'autre.

Les pièces (2) sont amenées jusqu'au système polyarticulé (4) par l'intermédiaire de moyens d'approvisionnement (7). Ces moyens d'approvisionnement (7) se présentent sous la forme d'un convoyeur (7) sur lequel sont disposés des plateaux thermoformés (6) recevant une pluralité de pièces (2) à accrocher. Le convoyeur (7) et les plateaux thermoformés (6) permettent de présenter des pièces (2) audit premier système polyarticulé (4). Comme indiqué, les pièces peuvent arriver en vrac sur le convoyeur.

Un premier système de vision (8) est assujetti au système polyarticulé (4) et est destiné à localiser les pièces (2) en position et en orientation pour permettre audit système polyarticulé (4) de saisir avec une orientation déterminée une pièce (2) à accrocher. Ce premier système de vision (8) comprend une première caméra munie d'un système d'éclairage. Cette première caméra est une caméra du type à deux dimensions et bien connue de l'homme du métier. Le principe consiste à prendre une ou plusieurs images des pièces (2) à accrocher et notamment des plateaux thermoformés (6) se présentant sur le convoyeur (7), à proximité du système polyarticulé (4). La première caméra visionne dans un plan, celui du convoyeur (7), et enregistre des images d'un plateau thermoformé (6), comprenant les pièces (2) à saisir, vue de dessus. Les images sont ensuite numérisées pour être utilisables par un logiciel de traitement d'image qui détermine la position et l'orientation de la pièce (2) à saisir en fonction d'un repère lié au système polyarticulé (4). Le traitement de l'image ayant été réalisé, les coordonnées de la pièce (2) sont envoyées au système polyarticulé (4) qui est apte à la saisir, dans une orientation définie pour l'accrocher de façon optimale.

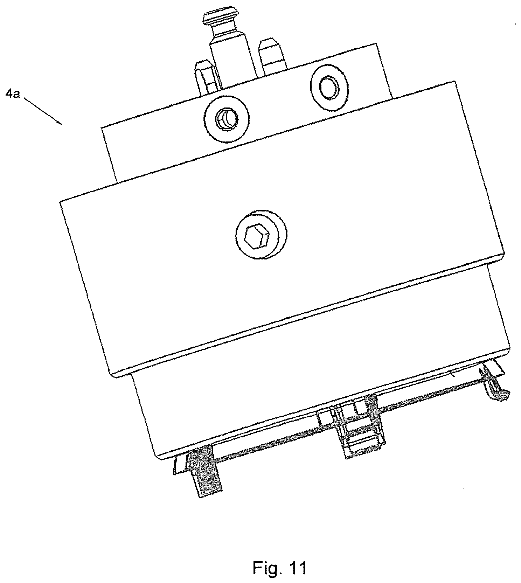

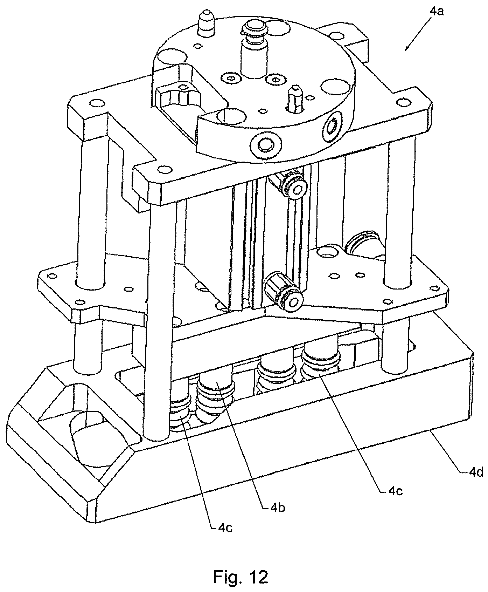

Le système polyarticulé (4) est apte à saisir une pièce (2), prédisposée dans le plateau thermoformé (6) ou sur le convoyer et à l'accrocher sur un support complexe (3). Le système polyarticulé (4) comprend à cet effet tout d'abord, des moyens de préhension (4a) permettant de saisir une pièce (2) et de réaliser les opérations d'accrochage desdites pièces (2). Ces moyens de préhension (4a) sont à définir selon la nature des pièces (2) à saisir et accrocher. Dans des formes de réalisations préférées et en référence à la figure 11, ces moyens de préhension (4a) se présentent sous la forme d'une pince apte à serrer les pièces (2). En référence à la figure 12, les moyens de préhension (4a) peuvent également se présenter sous la forme de vérins (4b) munis de ventouses (4c) par lesquelles de l'air est aspiré. Le système polyarticulé (4) s'approche alors d'une pièce (2), les vérins (4b) sont actionnés de manière à faire descendre les ventouses (4c) à proximité de la pièce (2) et, au contact de la pièce (2), les ventouses (4c) se collent à celle-ci et la soulèvent par aspiration. Un élément de centrage (4d) de forme complémentaire à la pièce (2) est agencé autour des ventouses (4c) et forme une sorte de compartiment pour, lorsque les vérins (4b) remontent, que la pièce (2) se loge dans ledit compartiment et se retrouve dans une orientation bien définie, permettant une accroche optimale de la pièce (2).

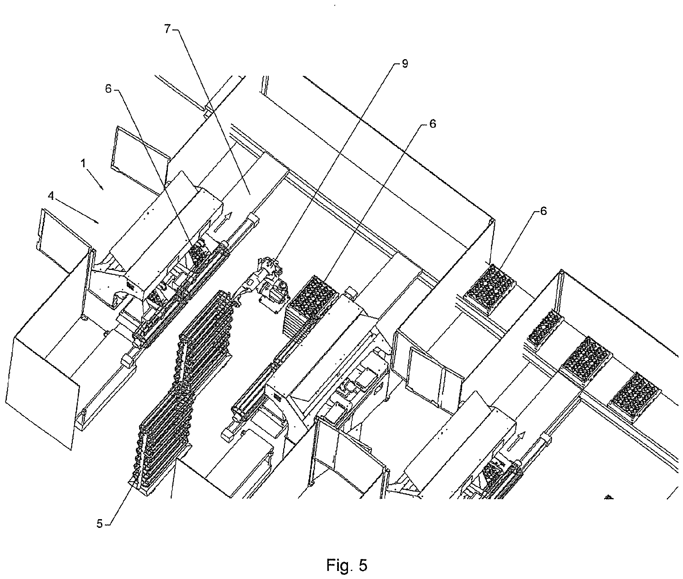

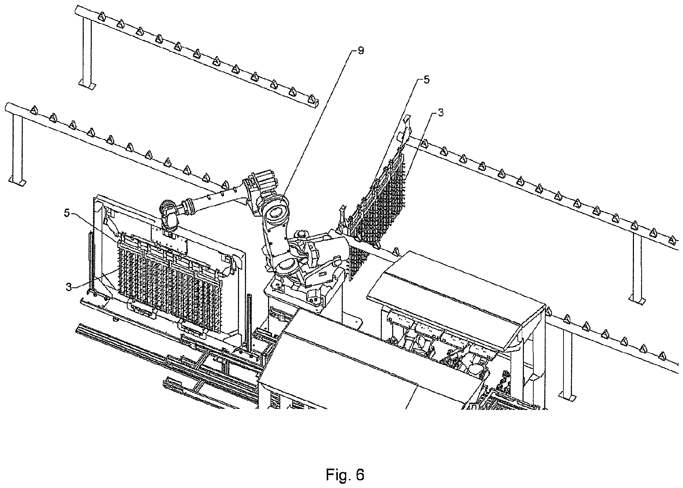

L'installation (1) comprend ensuite des moyens de positionnement (9), permettant le positionnement d'un support complexe (3) à proximité du système polyarticulé (4). Dans une forme de réalisation préférée et en référence aux figures 5 et 6, ces moyens de positionnement se présentent sous la forme d'un deuxième système d'axes (9) *(polyarticulés ou non avec par exemple six degrés de liberté).* Ce deuxième système d'axes (9) est destiné à positionner lesdits supports complexes (3) à proximité du système polyarticulé (4), lesdits supports complexes (3) étant, de manière générale, régulièrement répartis sur toute la surface définie par un élément formant support (5). Le deuxième système (9) est notamment assujetti à un automate, afin que dès que le système polyarticulé (4) accroche une pièce (2) sur un support complexe (3), l'automate envoi un signal audit deuxième système (9) lui faisant positionner, à proximité du système polyarticulé (4), un nouveau support complexe (3) apte à recevoir une nouvelle pièce (2). Une fois que tous les supports complexes (3) de l'élément formant support (5) ont reçus une pièce (2), le deuxième système (9) sort ledit élément formant support (5) de l'installation (1) et en saisi un nouveau.

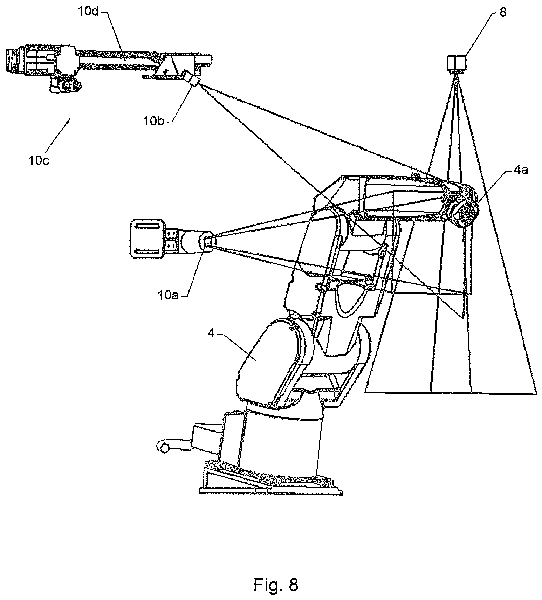

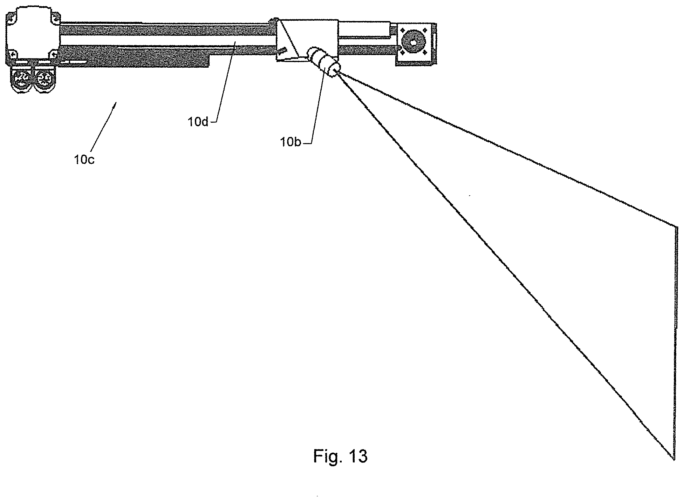

Un deuxième système de vision (10) est assujetti au système polyarticulé (4) et est destiné à localiser le support complexe (3) destiné à recevoir la pièce (2) à accrocher, pour permettre audit système polyarticulé (4) d'accrocher ladite pièce (2) sur le support complexe (3). Ce deuxième système de vision (10) permet la reconstruction d'une image en trois dimensions des supports complexes (3), pour l'opération d'accrochage des pièces (2) proprement dites. Ce deuxième système de vision (10) est constitué par tout type de système apte à reconstruire une image en trois dimensions. En référence aux figures 8, 9 et 10, ce deuxième système de vision (10) comprend une deuxième caméra (10a) et un émetteur L.A.S.E.R. (10b). Cette deuxième caméra (10a) est une caméra du type à trois dimensions et bien connue de l'homme du métier. L'émetteur LA.S.E.R. est en outre assujetti à des moyens de translation rectiligne (10c) dans un plan parallèle au plan de vision de ladite deuxième caméra (10a). En référence à la figure 13, les moyens de translation rectiligne (10c) se présentent sous la forme d'un vérin (10d) apte à déplacer l'émetteur L.A.S.E.R. (10b) pour lui faire subir ladite translation rectiligne. Ces moyens de translation (10c) peuvent notamment se présenter sous la forme d'une roue dentée coopérant avec une crémaillère. Le principe consiste en ce que l'émetteur L.A.S.E.R. (10b) émette un faisceau L.A.S.E.R. d'une certaine longueur d'onde, sur le support complexe (3) apte à recevoir la pièce (2) à accrocher, et effectue un balayage dudit support complexe (3) par l'intermédiaire de la translation rectiligne. La deuxième caméra (10a), décalée angulairement par exemple à environ 45° par rapport au plan (laser ; support complexe (3), analyse la réflexion de la lumière L.A.S.E.R. au moyen d'un capteur photographique du type CMOS. Ensuite, par des calculs basés sur le principe de triangulation, les coordonnées des supports complexes (3) sont déterminées en temps réel et envoyées au système polyarticulé (4) qui est apte à accrocher la pièce (2) de façon optimale.

Les coordonnées des supports complexes (3) sont calculées en temps réel selon les trois dimensions et recalculées pour chaque support complexe (3). Ainsi l'inconvénient lié à la non répétabilité desdits supports complexes (3) est supprimé. La trajectoire d'accroche du système polyarticulé (4) s'adapte à la déformation des supports complexes (3), dans une certaine limite déterminée. Au-delà, le système polyarticulé (4) n'accroche pas la pièce (2) et le deuxième système polyarticulé (9) présente audit système polyarticulé (4), un nouveau support complexe (3).

Ce principe de triangulation mis en œuvre dans la forme de réalisation illustrée aux figures permet de construire l'image en trois dimensions qui doit ensuite être analysée pour rechercher les coordonnées qui conviennent le mieux en fonction de la géométrie. Il est donc nécessaire que l'installation présente des capacités d'adaptation pour changer automatiquement de référence en fonction de pièces et du support complexes.

Selon l'invention, en fonction d'un algorithme spécifique, l'installation est apte à procéder à un changement de références à partir du moment où elle connaît la pièce qui a été « apprise » une première fois et créée dans une base de données. L'installation peut également s'auto-configurer rapidement et d'une manière entièrement automatique pour passer d'un cadre complexe à un autre, sans aucune intervention manuelle. A noter que l'utilisateur peut apprendre de nouvelles références au moment de l'intervention.

L'installation dispose donc d'une capacité d'apprentissage accessible avec de nouvelles références quand une nouvelle géométrie de pièces arrive.

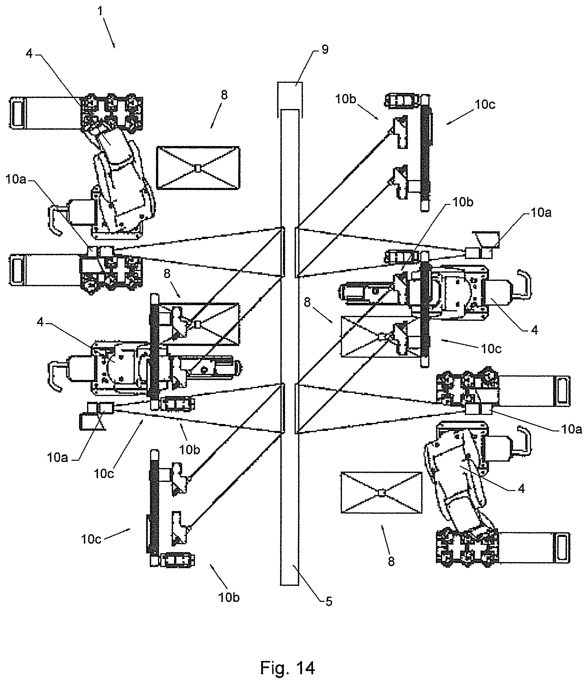

En référence à la figure 14, une telle installation (1) peut notamment comprendre plusieurs systèmes polyarticulés (4) pour effectuer les opérations d'accrochage de pièces (2) proprement dites. Dans une forme de réalisation préférée, l'installation (1) comprend quatre systèmes polyarticulés (4). Ces quatre systèmes polyarticulés (4) sont disposés deux à deux de chaque côté d'un convoyeur (7) et en quinconce. Cet exemple est cité à titre d'exemple non limitatif et le nombre de système polyarticulé (4) n'est pas limité, ainsi que leur configuration (face à face, quinconce, etc.). Les supports complexes (3) sont dans ce cas répartis sur les deux faces d'un cadre support (5) par exemple. Le nombre de cadres supports (5) n'est pas limité, lesdits cadres peuvent être au nombre de deux, un pour deux systèmes polyarticulés (4). Ces cadres (5) sont présentés à proximité des systèmes polyarticulés (4) par l'intermédiaire d'autres systèmes polyarticulés (9).

Ainsi et de la même manière que précédemment, les systèmes polyarticulés (4) destinés à accrocher des pièces (2) sur les supports complexes (3) sont assujettis à deux systèmes de vision (8, 10). Un premier système de vision (8) pour localiser en position et en orientation les pièces (2) à saisir et un deuxième système de vision (10) en trois dimensions pour localiser le support complexe (3) destiné à recevoir la pièce (2) à accrocher. Dans une telle installation (1), les quatre systèmes polyarticulés (4) réalisent les opérations d'accrochage de pièces (2) simultanément, chacun travaillant sur une face d'un cadre support (5).

Dans une telle installation (1), les systèmes de vision (10) utilisés pour localiser le support complexe (3) destiné à recevoir la pièce (2) à accrocher peuvent s'interférer entre eux. En effet, l'émetteur L.A.S.E.R. (10b) du système de vision (10) d'un système polyarticulé (4) peut parasiter celui d'en face. Pour éviter cela, on utilise des émetteurs L.A.S.E.R. (10b) émettant des faisceaux L.A.S.E.R. de longueurs d'ondes différentes, en combinaison avec des filtres associés aux objectifs des caméras (10a) utilisées. Le filtre d'une caméra (10a) ne laissera passer que les faisceaux L.A.S.E.R. réfléchis de l'émetteur L.A.S.E.R. (10b) qui lui est associé.

L'invention concerne également un procédé d'accroche en automatique de pièces (2) sur des supports (3) de forme spécifique de type griffes ou épingles et de géométrie non répétable d'un support à l'autre. Le procédé comprend selon un mode de réalisation particulier, les étapes consistant à :
- approvisionner un système polyarticulé (4) en pièces (2) par l'intermédiaire de moyens d'approvisionnement (7),
- localiser une pièce (2), en position et en orientation, au moyen d'un premier système de vision (8) assujetti au système polyarticulé (4),
- saisir une pièce (2) au moyen dudit système polyarticulé (4),
- positionner un support (3) à proximité du système polyarticulé (4), par l'intermédiaire de moyens de positionnement (9) de supports (3),
- localiser, au moyen d'un deuxième système de vision (10) sous la forme d'un système de reconstruction d'image en trois dimensions, le support (3) destiné à recevoir la pièce (2) à accrocher,
- accrocher ladite pièce (2) au moyen du système polyarticulé (4) et,
- positionner à proximité du système polyarticulé (4), et par l'intermédiaire des moyens de positionnement (9) des supports (3), un autre support (3) destiné à recevoir une autre pièce (2) à accrocher.

Dans un tel procédé, la saisie d'une pièce (2) par le système polyarticulé (4) est réalisée en temps masqué par rapport au positionnement des supports complexes (3) qui est réalisée par les moyens de positionnement (9), et en temps masqué par rapport à la localisation des supports complexes (3) réalisée par le deuxième système de vision (10).

L'accroche d'une pièce (2) sur un support complexe (3) est également réalisée en temps masqué par rapport à l'approvisionnement en pièces (2) du système polyarticulé (4) qui est réalisé par les moyens d'approvisionnement (7), et en temps masqué par rapport à la localisation de la position et de l'orientation des pièces (2) qui est réalisée par le premier système de vision (8).

De cette manière, le temps nécessaire à l'accrochage d'une pièce (2) par le système polyarticulé (4) est très court.

Comme il ressort de ce qui précède, l'invention fournit ainsi une installation (1) et un procédé d'accrochage automatique de pièces (2) sur des supports (3) de forme spécifique de type griffes ou épingles donnant entière satisfaction. Plus particulièrement, l'installation (1) et le procédé permettent d'augmenter la rapidité d'accroche des pièces (2) sur lesdits supports (3), améliorant ainsi la productivité d'une chaine de production par exemple. L'invention permet également d'automatiser lesdites opérations d'accrochage de pièces (2) et notamment de s'adapter en temps réel à la géométrie des supports (3) qui n'est pas répétable.

## Revendications

1. Installation (1) d'accrochage automatique de pièces (2) sur des supports (3) de forme spécifique de type griffes ou épingles, ***caractérisée en ce qu'***elle comprend :
- des supports (3) de forme spécifique de type griffes ou épingles et de géométrie non répétable d'un support à l'autre
- au moins un système polyarticulé (4), destiné à effectuer les opérations d'accroche de pièces (2) proprement dites, sur les supports (3), et comprenant des moyens de préhension (4a) d'au moins une pièce (2),
- un premier système de vision (8), assujetti au système polyarticulé (4) et destiné à localiser les pièces (2) en position et en orientation pour permettre audit système polyarticulé (4) de saisir avec une orientation déterminée au moins une pièce (2) à accrocher,
- des moyens de positionnement (9) d'un support (3) à proximité du système polyarticulé (4),
- un deuxième système de vision (10), sous la forme d'un système de reconstruction d'image en trois dimensions, assujetti au système polyarticulé (4) et destiné à localiser le support (3), pour permettre audit système polyarticulé (4) d'accrocher ladite pièce (2) sur ledit support (3).

2. Installation (1) selon la revendication 1, ***caractérisée en ce que*** les moyens de préhension (4a) du système polyarticulé (4) se présentent sous la forme d'au moins une pince.

3. Installation (1) selon la revendication 1, ***caractérisée en ce que*** les moyens de préhension (4a) du système polyarticulé (4) se présentent sous la forme d'au moins un vérin assujetti à au moins une ventouse.

4. Installation (1) selon la revendication 3, ***caractérisée en ce que*** les moyens de préhension (4a) du système polyarticulé (4) comprennent un élément de centrage (4d) permettant de centrer la pièce (2) saisie, l'élément de centrage (4d) étant de forme complémentaire à la pièce (2) saisie pour la forcer à adopter une orientation définie.

5. Installation (1) selon la revendication 1, ***caractérisée en ce qu***'elle comprend des moyens d'approvisionnement (7) en pièces (2) à proximité du système polyarticulé (4).

6. Installation (1) selon la revendication 1, ***caractérisée en ce que*** le premier système de vision (8) se présente sous la forme d'une caméra et d'un système d'éclairage.

7. Installation (1) selon la revendication 1, ***caractérisée en ce que*** le deuxième système de vision (10) se présente sous la forme d'une deuxième caméra (10a) et d'un émetteur LA.S.E.R. muni d'une tête éclatant le faisceau dudit émetteur L.A.S.E.R. (10b) sous la forme d'une ligne, ledit émetteur L.A.S.E.R. (10b) étant assujetti à des moyens de translation rectiligne (10c) dans un plan parallèle au plan de vision de ladite deuxième caméra (10a).

8. Installation (1) selon la revendication 1, ***caractérisée en ce que*** les moyens de positionnement (9) se présentent sous la forme d'un deuxième système d'axes (9) destiné à positionner lesdits supports (3) à proximité du système polyarticulé (4), lesdits supports (3) étant régulièrement répartis sur toute la surface définie par un élément formant support (5).

9. Procédé d'accroche en automatique de pièces (2) sur des supports (3) de forme spécifique de type griffes ou épingles et de géométrie non répétable d'un support à l'autre, ***caractérisé en ce qu***'il comprend les étapes consistant à :
- localiser une pièce (2), en position et en orientation, au moyen d'un premier système de vision (8) assujetti à un système polyarticulé (4),
- saisir une pièce (2) au moyen dudit système polyarticulé (4),
- positionner un support (3) à proximité du système polyarticulé (4), par l'intermédiaire de moyens de positionnement (9) de supports (3),
- localiser, au moyen d'un deuxième système de vision (10) sous la forme d'un système de reconstruction d'image en trois dimensions, le support (3) destiné à recevoir la pièce (2) à accrocher,
- accrocher ladite pièce (2) au moyen du système polyarticulé (4) et,
- positionner à proximité du système polyarticulé (4), et par l'intermédiaire des moyens de positionnement (9) des supports (3), un autre support (3) destiné à recevoir une autre pièce (2) à accrocher.

10. Procédé selon la revendication 9, ***caractérisé en ce qu***'il comprend, avant l'étape consistant à localiser une pièce (2) en position et en orientation, une étape consistant à approvisionner le système polyarticulé (4) en pièces (2) par l'intermédiaire de moyens d'approvisionnement (7).

## Patentansprüche

1. Anlage (1) zum automatischen Befestigen von Teilen (2) an speziell geformten Trägern (3) vom Typ Klaue oder Stift, **dadurch gekennzeichnet, dass** sie umfasst:
- Stützen (3) von spezifischer Form des Klauen- oder Stifttyps und von nicht wiederholbarer Geometrie von einer Stütze zur anderen
- mindestens ein polyartikuliertes System (4), das dazu bestimmt ist, die eigentlichen Operationen der Befestigung von Teilen (2) an den Trägern (3) durchzuführen, und das Mittel (4a) zum Greifen mindestens eines Teils (2) umfasst,
- ein erstes Sichtsystem (8), das an dem polyartikulierten System (4) befestigt ist und dazu bestimmt ist, die Teile (2) in Position und Ausrichtung zu lokalisieren, um es dem polyartikulierten System (4) zu ermöglichen, mit einer bestimmten Ausrichtung mindestens ein Teil (2) zu erfassen, das eingehakt werden soll,
- Mittel (9) zur Positionierung einer Stütze (3) in der Nähe des polyartikulierten Systems (4),
- ein zweites Sichtsystem (10) in Form eines dreidimensionalen Bildrekonstruktionssystems, das an dem polyartikulierten System (4) befestigt ist und dazu bestimmt ist, den Träger (3) zu lokalisieren, um es dem polyartikulierten System (4) zu ermöglichen, das Teil (2) an dem Träger (3) einzuhaken.

2. Anlage (1) nach Anspruch 1, **dadurch gekennzeichnet, dass** die Greifmittel (4a) des polyartikulierten Systems (4) die Form mindestens einer Klemme haben.

3. Anlage (1) nach Anspruch 1, **dadurch gekennzeichnet, dass** die Greifmittel (4a) des polyartikulierten Systems (4) die Form von mindestens einem Zylinder haben, der an mindestens einem Saugnapf befestigt ist.

4. Anlage (1) nach Anspruch 3, **dadurch gekennzeichnet, dass** die Greifmittel (4a) des polyartikulierten Systems (4) ein Zentrierelement (4d) zum Zentrieren des gegriffenen Teils (2) umfassen, wobei das Zentrierelement (4d) eine zu dem gegriffenen Teil (2) komplementäre Form aufweist, um es zu zwingen, eine definierte Ausrichtung anzunehmen.

5. Anlage (1) nach Anspruch 1, **dadurch gekennzeichnet, dass** sie Mittel (7) zur Versorgung mit Teilen (2) in der Nähe des polyartikulierten Systems (4) umfasst.

6. Anlage (1) nach Anspruch 1, **dadurch gekennzeichnet, dass** das erste Visionssystem (8) in Form einer Kamera und eines Beleuchtungssystems vorliegt.

7. Anlage (1) nach Anspruch 1, **dadurch gekennzeichnet, dass** das zweite Sichtsystem (10) die Form einer zweiten Kamera (10a) und eines LASER-Senders (10b) hat, der mit einem Kopf versehen ist, der das Strahlenbündel des genannten LASER-Senders (10b) in Form einer Linie zerlegt, wobei der genannte LASER-Sender (10b) geradlinigen Translationsmitteln (10c) in einer zur Sichtebene der genannten zweiten Kamera (10a) parallelen Ebene unterworfen ist.

8. Anlage (1) nach Anspruch 1, **dadurch gekennzeichnet, dass** die Positionierungsmittel (9) die Form eines zweiten Achsensystems (9) haben, das dazu bestimmt ist, die Träger (3) in der Nähe des polyartikulierten Systems (4) zu positionieren, wobei die Träger (3) gleichmäßig über die gesamte durch ein Träger bildendes Element (5) definierte Fläche verteilt sind.

9. Verfahren zum automatischen Befestigen von Teilen (2) an Trägern (3) mit spezifischer Form, wie Klauen oder Stifte, und mit nicht wiederholbarer Geometrie von einem Träger zum anderen, **dadurch gekennzeichnet, dass** es die Schritte umfasst, die bestehen aus :
- Lokalisierung eines Teils (2) in Position und Orientierung mittels eines ersten Sehsystems (8), das an einem polyartikulierten System (4) befestigt ist,
- das Greifen eines Werkstücks (2) mittels des genannten polyartikulierten Systems (4),
- Positionierung einer Stütze (3) in der Nähe des polyartikulierten Systems (4) mit Hilfe von Positionierungsmitteln (9) für Stützen (3),
- mittels eines zweiten Sichtsystems (10) in Form eines dreidimensionalen Bildrekonstruktionssystems die Halterung (3) zur Aufnahme des aufzuhängenden Teils (2) zu lokalisieren,
- das Einhaken des genannten Teils (2) mit Hilfe des polyartikulierten Systems (4) und,
- Positionierung in der Nähe des polyartikulierten Systems (4) und mittels der Positionierungsmittel (9) der Stützen (3) eine weitere Stütze (3), die zur Aufnahme eines weiteren aufzuhängenden Teils (2) bestimmt ist.

10. Verfahren nach Anspruch 9, **dadurch gekennzeichnet, dass** es vor dem Schritt, der darin besteht, ein Teil (2) in Position und Ausrichtung zu lokalisieren, einen Schritt umfasst, der darin besteht, das polyartikulierte System (4) mit Teilen (2) mit Hilfe von Versorgungsmitteln (7) zu versorgen.

## Claims

1. Installation (1) for automatically hanging parts (2) on specifically shaped supports (3) of the claw or pin type, **characterized in that** it comprises :
- supports (3) with a specific shape such as claws or pins and with a non-repeatable geometry from one support to another
- at least one polyarticulated system (4), intended to carry out the actual operations of hanging parts (2) to the supports (3), and comprising means (4a) for gripping at least one part (2),
- a first vision system (8), attached to the polyarticulated system (4) and intended to locate the parts (2) in position and orientation to enable said polyarticulated system (4) to capture with a determined orientation at least one part (2) to be hung,
- means for positioning (9) a support (3) close to the polyarticulated system (4),
- a second vision system (10), in the form of a three-dimensional image reconstruction system, attached to the polyarticulated system (4) and intended to locate the support (3), to enable said polyarticulated system (4) to hang said part (2) on said support (3).

2. Installation (1) according to claim 1, **characterized in that** the gripping means (4a) of the polyarticulated system (4) are in the form of at least one clamp.

3. Device (1) according to claim 1, **characterized in that** the gripping means (4a) of the polyarticulated system (4) are in the form of at least one cylinder attached to at least one suction cup.

4. Installation (1) according to claim 3, **characterized in that** the gripping means (4a) of the polyarticulated system (4) comprise a centering element (4d) for centering the gripped part (2), the centering element (4d) being of complementary shape to the gripped part (2) to force it to adopt a defined orientation.

5. Installation (1) according to claim 1, **characterized in that** it comprises means (7) for supplying parts (2) in the vicinity of the polyarticulated system (4).

6. Installation (1) according to claim 1, **characterized in that** the first vision system (8) is in the form of a camera and a lighting system.

7. Installation (1) according to claim 1, **characterized in that** the second vision system (10) is in the form of a second camera (10a) and of a LASER emitter provided with a head shining the beam of said LASER emitter (10b) in the form of a line, said LASER emitter (10b) being subject to rectilinear translation means (10c) in a plane parallel to the plane of vision of said second camera (10a).

8. Installation (1) according to claim 1, **characterized in that** the positioning means (9) are in the form of a second system of axes (9) intended to position said supports (3) close to the polyarticulated system (4), said supports (3) being regularly distributed over the entire surface defined by a support element (5).

9. Process for automatically hanging parts (2) to supports (3) of specific shape such as claws or pins and of non-repeatable geometry from one support to another, **characterized in that** it comprises the steps consisting of:
- locating a part (2), in position and orientation, by means of a first vision system (8) subject to a polyarticulated system (4),
- gripping a part (2) by means of said polyarticulated system (4),
- positioning a support (3) close to the polyarticulated system (4), by means of positioning means (9) for supports (3),
- locating, by means of a second vision system (10) in the form of a three-dimensional image reconstruction system, the support (3) intended to receive the part (2) to be hung,
- hanging the said part (2) by means of the polyarticulated system (4) and,
- positioning close to the polyarticulated system (4), and through the positioning means (9) of the supports (3), another support (3) intended to receive another part (2) to be hung.

10. Method according to claim 9, **characterized in that** it comprises, before the step consisting of locating a part (2) in position and orientation, a step consisting of supplying the polyarticulated system (4) with parts (2) via supply means (7).
